# FASCICULE DE BREVET EUROPEEN

(11) **EP 0 725 105 B1**
(45) Date de publication et mention de la délivrance du brevet: **01.12.1999**
(21) Numéro de dépôt: 95490004.9
(22) Date de dépôt: 06.02.1995
(51) Int. Cl.: C08K 3/40, C08K 7/20, C08K 3/26, C08K 13/00, C08L 67/06, E03C 1/18, A47K 3/02

(54) **Composition de polyester insaturée destinée aux produits sanitaires**
Ungesättigte Polyesterabmischung für Sanitärprodukte
Unsaturated polyester composition for sanitary products

(43) Date de publication de la demande: 07.08.1996
(73) Titulaire: SOCIETE CIVILE NEURONE Société Civile dite :, F-72140 Sille Le Guillaume (FR)
(72) Inventeur: Leverrier, Thierry, F-72110 Torce en Vallée (FR)
(74) Mandataire: Lepage, Jean-Pierre

(56) Documents cités:
- FR-A- 1 413 988
- US-A- 4 016 131
- CHEMICAL ABSTRACTS, vol. 90, no. 20, 14 Mai 1979, Columbus, Ohio, US; abstract no. 153171, & JP-A-53 140 397 (MATSUSHITA ELECTRIC WORKS) 7 Décembre 1978
- W. WOEBCKEN 'Kunststoffhandbuch Bd. 10, Duroplaste, 2.Auflage' 1988 , CARL HANSER VERLAG , MüNCHEN /GER * page 162 - page 163 * * page 166 * * page 287 - page 292 * * page 312 - page 314 *
- DATABASE WPI Week 9431, Derwent Publications Ltd., London, GB; AN 94-252573 & JP-A-6 183 808 (TAKEDA CHEM. IND. LTD.) 5 Juillet 1994
- DATABASE WPI Week 9148, Derwent Publications Ltd., London, GB; AN 91-350020 & JP-A-3 234 761 (MATSUSHITA ELECTRIC WORKS) 18 Octobre 1991
- CHEMICAL ABSTRACTS, vol. 117, no. 14, 5 Octobre 1992, Columbus, Ohio, US; abstract no. 132237, & JP-A-4 096 975 (MATSUSHITA DENKO K.K.) 30 Mars 1992

## Description

La présente invention est relative à une composition matière à mouler spécialement destinée aux produits sanitaires tels que éviers, baignoires, lavabos en matière plastique.

Elle trouvera notamment son application dans le domaine de l'industrie des produits sanitaires et notamment des pièces moulées pour des produits utilisables comme équipement de la salle de bain ou de la cuisine, tels que des éviers, baignoires ou lavabos.

La composition selon l'invention a été particulièrement étudiée pour les produits sanitaires mais elle trouvera également des applications dans le domaine du bâtiment pour des revêtements extérieurs ou dans les industries automobiles ou les meubles.

Les produits sanitaires en matière plastique sont amenés à remplacer les produits sanitaires classiques en métal ou faïence qui ont un prix de revient élevé et une durée de vie faible.

La matière plastique utilisée aujourd'hui, qui intègre des produits naturels, constitue une matière composite minérale. Ainsi, le produit fabriqué doit avoir des qualités élevées lorsqu'on l'applique par exemple à un évier qui doit avoir une résistance aux chocs importante car il est utilisé avec des ustensiles de cuisine métalliques lourds et variés. L'évier doit encore présenter une bonne résistance a l'abrasion et à la rayure et sa résistance mécanique doit être de bon niveau.

Compte tenu de son environnement, l'évier doit également être très stable à l'eau et ne pas être agressé par les différents produits ménagers. Le matériau mis en oeuvre doit encore avoir une bonne isolation phonique et thermique.

La fabrication en grande série de ces produits implique également que les techniques de mise en oeuvre de la matière avant et pendant le moulage soient faciles pour augmenter les cadences de fabrication et diminuer les quantités de rebut.

Les produits fabriqués actuellement présentent des inconvénients importants en ce qui concerne la résistance mécanique et la stabilité à l'eau. La matière mise en oeuvre ne permet pas d'obtenir des produits parfaitement homogènes et faciles à mouler à haute température et haute pression.

On connaît les matières à mouler à base de résine thermodurcissable et de charges minérales qui sont déjà utilisées pour la fabrication de produits sanitaires. Dans la composition des matières à mouler connues, on trouve tout d'abord une résine du type polyester non saturé dissoute dans un mélange de monomères liquides qui comprend par exemple un groupe vinyle. On utilise également dans ces matières un agent thermoplastique anti-retrait ayant une action pendant la copolymérisation de la résine et du monomère. On utilise également un catalyseur du type peroxyde organique pour amorcer la réticulation de la résine.

Il est également connu dans les compositions utilisées de mettre en oeuvre des fibres de renforcement telles que des fibres de verre pour assurer la rigidité du matériau réticulé. Compte tenu que ces produits sont moulés à haute température et haute pression, on met en oeuvre un agent de démoulage ayant des propriétés connues comme le stéarate de calcium et de zinc.

Les charges contenues dans la résine connue sont surtout constituées par de la silice et elles ne comprennent pas de carbonate de calcium. En effet, l'Homme de l'Art pourrait croire que le carbonate de calcium tel que la craie qui a notamment la propriété d'absorber beaucoup l'eau n'est pas appliqué à entrer dans une composition particulièrement étudiée pour les produits sanitaires.

On a découvert que l'utilisation du carbonate de calcium dans certaines conditions pouvait au contraire permettre d'obtenir des produits sanitaires de très bonne qualité et notamment ayant une bonne résistance à l'abrasion et à l'eau.

En effet, si le carbonate de calcium est utilisé sous forme de marbre avec ou sans enrobage pigmentaire, en combinaison avec des billes de verre, il permet d'obtenir un effet inattendu qui est la diminution de la dégradation des fibres de verre normalement introduites pour obtenir la rigidité du matériau réticulé.

On a en effet constaté que, dans les compositions comprenant des fibres de verre et des charges surtout constituées par de la silice, cette dernière avait une action néfaste sur le produit fini puisque du fait de son pouvoir abrasif, la silice diminue fortement les fibres de verre en provoquant leur cassure dans des proportions importantes. Cette diminution du pouvoir de rigidification des fibres de verre conduit à un produit sanitaire qui manque de résistance mécanique et de résistance à l'abrasion car les fibres de verre, d'une longueur déterminée, ont été cassées.

La présence des microbilles de verre dans les charges selon l'invention a également un avantage important car elles permettent par leur effet de roulement à bille d'obtenir une mise en oeuvre de fabrication avec un meilleur remplissage des moules et une meilleure compacité et homogénéité du mélange.

La fabrication est ainsi améliorée et on pourra aussi diminuer les rebuts et notamment les pièces comprenant des microbulles en surface. L'enrobage chimique par le "Silane" des billes de verre provoque un pontage chimique entre la résine et les billes, ce qui naturellement améliore l'accrochage.

Dans le cas d'une utilisation du marbre sous forme cristalline avec un enrobage pigmentaire, on diminue encore l'absorption d'eau en masquant le carbonate de calcium par le pigment enrobé.

Un des premiers objets de l'invention est de mettre en oeuvre une composition matière à mouler spécialement destinée aux produits sanitaires, qui constituera un produit naturel ayant une bonne résistance mécanique avec une résistance à l'abrasion et aux rayures forte, une bonne stabilité à l'eau et à la chaleur. Le produit sanitaire devra également résister à l'agression des produits ménagers et avoir une bonne isolation phonique et thermique.

Un autre objet de l'invention est d'utiliser des fibres de verre qui ne seront pas ou beaucoup moins endommagées par les charges et on utilisera pour cela un carbonate de calcium sous sa forme cristalline de marbre avec ou sans enrobage pigmentaire qui aura une agressivité beaucoup moins importante que la silice et qui préservera beaucoup mieux les fibres de verre.

Un autre avantage de la composition matière à mouler spécialement destinée aux produits sanitaires selon l'invention est d'être facilement mise en oeuvre car on obtient un très bon remplissage du moule ainsi qu'un très bon démoulage de la pièce.

Un autre objet de la composition matière à mouler spécialement destinée aux produits sanitaires selon l'invention est de diminuer les effets de vagues lors du poste retrait de la pièce pendant le refroidissement car la présence des billes de verre qui s'empilent permet de presque supprimer ce phénomène.

Un autre avantage de la composition matière à mouler spécialement destinée aux produits sanitaires selon l'invention est d'obtenir un bon rendu de la pièce, le marbre procurant l'aspect moucheté. Les grains mouchetés sont rendus pigmentés ou non, d'une couleur différente ou identique au fond.

Un autre avantage de la composition matière à mouler spécialement destinée aux produits sanitaires selon l'invention est d'améliorer le fluage de la matière sous pression pour diminuer ainsi les rebuts de fabrication dus aux porosités.

Un autre avantage de la composition matière à mouler spécialement destinée aux produits sanitaires selon l'invention est que la mise en oeuvre des microbilles de verre qui augmentent la compacité sous pression permet également d'augmenter le pourcentage en trihydrate d'alumine, troisième charge qui pourra être éventuellement intégrée dans la composition.

Un autre objet de la composition matière à mouler spécialement destinée aux produits sanitaires selon l'invention est que les produits fabriqués auront une tenue accrue aux attaques physiques et chimiques provoquées par l'augmentation de l'enrobage des microbilles de verre qui provoque un pontage chimique entre les billes de verre et la résine. Cet enrobage provoque également une tenue accrue du produit aux attaques physiques et chimiques.

Un autre avantage de la composition matière à mouler spécialement destinée aux produits sanitaires selon l'invention est que le mélange des charges carbonate de calcium, marbre et microbilles de verre, donne une matière fluide plus facile à travailler et à mouler.

Un autre objet de la composition matière à mouler spécialement destinée aux produits sanitaires selon l'invention est de pouvoir réaliser des produits colorés en mettant en oeuvre un marbre avec un enrobage pigmentaire du type epoxy polyuréthanne ou polyester saturé, ce qui permet une meilleure adhérence sur le substrat et également une meilleure tenue chimique et mécanique.

Un autre avantage de la composition matière à mouler spécialement destinée aux produits sanitaires selon l'invention est d'obtenir une bonne finition de la pièce.

Un autre avantage de la composition matière à mouler spécialement destinée aux produits sanitaires selon l'invention est de diminuer l'absorption d'eau en utilisant un mélange de charges bien choisi et équilibré carbonate de calcium sous sa forme cristalline de marbre, microbilles de verre avec enrobage chimique, éventuellement complété par l'action d'un troisième constituant trihydrate d'alumine micronisé.

Un autre avantage de la composition matière à mouler spécialement destinée aux produits sanitaires selon l'invention, lorsqu'on met en oeuvre un produit pigmenté, est d'utiliser un marbre avec enrobage pigmentaire qui masque l'absorption d'eau et améliore encore les qualités du produit.

A cet effet, l'invention concerne une composition matière à mouler spécialement destinée aux produits sanitaires, tels que éviers, baignoires ou lavabos en matière plastique, susceptibles d'être moulés sous pression et à haute température, comprenant :
- une résine polyester réticulable dans un monomère liquide avec un groupe vinyle polymérisable,
- un polymère thermoplastique anti-retrait du type polyéthylène soluble dans le mélange de résine,
- un catalyseur peroxyde organique pour amorcer la réticulation de la résine par apport de radicaux libres lors de leur destruction à haute température,
- des fibres de renforcement telles que des fibres de verre pour assurer la rigidité du matériau réticulé,
- un agent de démoulage tel que stéarate de calcium ou de zinc,
caractérisée par le fait qu'elle contient des charges choisies parmi :
1°/ des microbilles de verre sodocalcique avec enrobage chimique,
2°/ du carbonate de calcium sous sa forme cristalline de marbre,
pour diminuer la dégradation des fibres de verre et obtenir un produit sanitaire résistant à l'abrasion, la chaleur et l'eau.

L'invention sera bien comprise en se référant à la description suivante, illustrée par un ou plusieurs modes d'exécution qui sont donnés à titre d'exemple non limitatif.

La composition matière à mouler selon l'invention s'applique tout particulièrement à des produits sanitaires réalisés en matière composite minérale, notamment pour la production des éviers, baignoires ou lavabos ou de toute appareil ou dispositif moulé qui aurait sensiblement les mêmes caractéristiques.

On sait que les produits sanitaires, compte tenu de leur usage dans la cuisine ou la salle de bains, doivent avoir des qualités très précises et très importantes en ce qui concerne notamment la résistance et l'isolation. Le sanitaire utilisé par exemple en tant qu'évier doit être constitué dans une matière très dure pour résister à l'abrasion notamment des ustensiles ménagers, il doit également être résistant à la chaleur et aux agressions des produits ménagers qui seront utilisés très souvent.

Parmi les autres qualités qui sont exigées pour les appareils sanitaires, on trouve également l'isolation phonique et thermique car il est en effet nécessaire que les bruits dans la cuisine ou la salle de bains ne soient pas transmis violemment par les produits sanitaires qui devront donc présenter une bonne isolation phonique.

Indépendamment des caractéristiques physico-chimiques élevées du matériau constituant les produits sanitaires, il faut également, au moment du choix d'une composition, avoir à l'esprit des exigences esthétiques de présentation du produit qui doit avoir un très bon état de surface, notamment en ce qui concerne sa brillance. Pour cela il faudra, s'il est fabriqué à partir d'une matière plastique, veiller à ce que le moulage et le démoulage s'effectuent dans de très bonnes conditions.

Outre ces caractéristiques esthétiques de surface, les appareils sanitaires sont également très souvent réalisés dans des matériaux colorés pour s'intégrer dans d'autres équipements de la cuisine ou de la salle de bains. Il faut, dans ce cas, veiller à ce que la coloration soit parfaite dans son homogénéité et sa répartition. On pourra également demander que la composition, outre l'effet de coloration, rende un effet de naturel, c'est-à-dire par exemple qu'elle imite un marbre ou une pierre. Dans ce cas, il pourra être demandé que le produit soit d'une couleur sur un fond et d'une autre couleur sur des grains mouchetés.

Les techniques de fabrication en série des produits sanitaires par moulage à haute température et à haute pression devront également être intégrées dans le choix de la composition car il faudra naturellement que le prix de revient des produits soit abaissé et que les rebuts de fabrication soient les moins importants possibles. On sait en effet qu'avec certaines compositions mal adaptées, on obtient une mauvaise mise en oeuvre de la matière ainsi qu'un mauvais démoulage. La matière mise en oeuvre devra donc avoir des qualités de fluage sous pression améliorées afin de diminuer les rebuts de fabrication à cause des porosités ou la présence de bulles en surface.

La composition de la matière à mouler selon l'invention qui sera moulée et polymérisée sous pression et à haute température comprend de façon connue une résine polyester réticulable dans un monomère liquide avec un groupe vinyle polymérisable. Il s'agit du produit qui va réticuler et va donc donner au produit moulé son aspect solide.

Différents types de résines polyester peuvent être utilisés et l'on a choisi par exemple de mettre en oeuvre une résine polyester insaturée, type orthophtalique NPG dissoute dans le styrène. On pourra utiliser d'autres produits similaires et notamment une résine vinylester ou acrylique. Dans la formule générale et selon les applications, on pourra mettre en oeuvre une quantité de 10 à 20 % en poids de résine polyester insaturée.

On a également choisi d'intégrer de façon connue dans la composition selon l'invention un polymère thermoplastique anti-retrait du type polyéthylène soluble dans le mélange de résine.

Ce polymère anti-retrait peut être par exemple du type polyéthylène soluble dans le mélange de résine monomère et copolymérisable avec le système. Il évite l'effet de vague qui se produit lors du poste retrait du produit sanitaire pendant le refroidissement.

Ce polymère thermoplastique anti-retrait permet également d'obtenir un meilleur aspect fini de la pièce et notamment de sa brillance.

On a utilisé de préférence un polymère antiretrait type polyéthylène et/ou polyester saturé dans des proportions de 4 à 7 % selon les applications.

Pour ce polymère anti-retrait, on pourrait encore mettre en oeuvre un polyester saturé, polyacétate de vinyle, EVA (copolymères d'éthylène et d'acétate de vinyle), ABS (copolymères d'acrylonitrile, de butadiène et de styrène), PMMA (le polyméthacrylate de méthyle).

On a également intégré dans la composition un catalyseur peroxyde organique pour amorcer la réticulation de la résine par apport de radicaux libres lors de leur destruction à haute température.

On a choisi de mettre en oeuvre dans la composition les catalyseurs suivants :

| | |
|---|---|
| Ethyl-2 perexanoate de butyle tertiaire | 0,03 à 0,5 % |
| Perbenzoate de butyle tertiaire | 0,10 à 0,4 % |
| Triméthyl-3,3,5 perhexanoate de butyle tertiaire | 0 à 0,1 % |

La fonction des catalyseurs est d'amorcer la réaction de la réticulation de la résine comprenant de vinyle par un apport des radicaux libres lors de la destruction à haute température.

On pourra, en ce qui concerne ces catalyseurs, mettre en oeuvre d'autres produits ayant la même fonction et notamment le carbonate d'isopropyle et de peroxyter-butyle.

On mettra en oeuvre un agent de démoulage dans la composition pour faciliter le moulage et le démoulage de la composition après polymérisation.

De tels produits sont actuellement connus en ce qui concerne ces caractéristiques et on met en oeuvre par exemple des stéarates de calcium ou de zinc qui favorisent le démoulage des pièces en formant une fine pellicule entre la pièce et le moule. On obtient ainsi une meilleure finition de la pièce. Ces agents de démoulage, stéarate de calcium et de zinc, sont de préférence utilisés dans des pourcentages de 0 à 1,7 %.

Il sera également intéressant d'intégrer dans la composition selon l'invention des agents inhibiteurs tels que la parabenzoquinone qui a en effet comme propriété de retarder la destruction des catalyseurs jusqu'à une certaine température. Ainsi, du fait du ralentissement de la réaction, il y a un meilleur remplissage du moule pendant la polymérisation. On pourra utiliser d'autres produits similaires tels que l'hydroquinone ou la benzoquinone. Dans l'exemple mis en oeuvre, la parabenzoquinone est utilisée entre 0 et 0,05 % en poids.

L'utilisation des fibres de verre dans la composition en tant que fibres de renforcement permet d'accroître la tenue mécanique du produit sanitaire par rapport à un produit similaire non fibré.

Ces fibres ont pour fonction d'assurer la rigidité du matériau réticulé et on utilise de préférence des fibres de verre coupées à une longueur de 6 millimètres.

On pourra mettre en oeuvre des fibres de verre de différentes origines et notamment des fibres synthétiques telles que celles de type polyester saturé ou acrylique ou alors végétale comme la wolastonite.

La quantité de fibres de verre mise en oeuvre sera comprise entre 5 et 10 %, il est important de pouvoir contrôler ce matériau pour assurer de bonnes qualités physiques et chimiques aux produits sanitaires fabriqués. Il est donc important, dans le procédé de fabrication et dans le choix des autres matériaux entrant dans la composition de ne pas sélectionner des produits ou des procédés trop abrasifs qui ont pour conséquence de provoquer des cassures dans la fibre de verre et de diminuer ainsi sa rigidité. Un tel effet est notamment obtenu lorsque l'on utilise dans la composition des charges à base de silice. L'invention préconise à cet effet de mettre en oeuvre des charges moins abrasives constituées de carbonate de calcium et de microbilles de verre avec enrobage chimique.

Le mélange de charges qui sera mis en oeuvre dans la composition selon l'invention comprendra de préférence de 15 à 25 % de carbonate de calcium sous sa forme cristalline de marbre avec ou sans enrobage pigmentaire. Les microbilles de verre seront utilisées entre 12 à 25 % en poids.

La charge carbonate de calcium sous sa forme cristalline de marbre avec ou sans enrobage pigmentaire est utilisée sous sa forme de marbre pou des granulométries allant de 0,20 à 7 millimètres. Comme il a déjà été indiqué ci-dessus, cette charge contrairement à l'idée répandue de l'Homme de l'Art, a une faible absorption d'eau par rapport à la forme broyée.

Il n'y a pas de dégradation des fibres de verre présentes dans le milieu, ce qui n'est pas le cas de la silice et dans le cas de l'utilisation d'un revêtement pigmentaire de type epoxy, polyuréthanne ou polyester saturé, on constate comme avantage, tel que cela a déjà été précisé, une meilleure adhérence sur le substrat par rapport à la silice et une meilleure tenue chimique et mécanique dans le milieu. La meilleure liaison et adhérence du revêtement sur son substrat donne d'une façon générale des meilleures propriétés chimiques et mécaniques aux produits sanitaires fabriqués.

La charge constituée par les microbilles de verre sodocalcique avec enrobage chimique est utilisée de préférence dans des proportions de 12 à 25 %. L'enrobage chimique peut être notamment "le squalane" des billes de verre qui provoque un pontage chimique entre la résine et les billes.

Les microbilles de verre pour une granulométrie donnée facilitent le fluage de la matière sous pression et diminuent donc de façon considérable le nombre de rebuts dus aux porosités.

La forme sphérique donne à ce constituant une compacité accrue sous pression, qui permet alors d'ajouter un troisième constituant en tant que charge, qui pourrait être par exemple le trihydrate d'alumine micronisé. C'est parce qu'on est parvenu à obtenir une meilleure compacité sous pression du mélange que l'on peut introduire si on le désire ce troisième constituant en tant que charge, qui permet pour certaines applications, de parvenir à un résultat différent.

L'enrobage des microbilles de verre permet une liaison chimique avec la résine, ce qui confère une tenue accrue du produit moulé aux attaques chimiques et physiques et notamment à l'eau et aux produits ménagers.

Par un déplacement ordonné et uniforme, les microbilles de verre s'immiscent entre les fibres de verre et contribuent à les répartir de façon homogène. On améliore ainsi le fluage de la matière sous pression ainsi que le remplissage du moule. L'amélioration et l'homogénéité de la matière permet également de diminuer les rebuts de fabrication.

Les microbilles de verre n'endommagent pas les fibres de verre, c'est pourquoi il est recommandé dans la composition selon l'invention de mettre en oeuvre ces microbilles plutôt que de la silice qui a un rôle abrasif.

On utilise ainsi les charges carbonate de calcium et billes de verre comme agent de fluage et d'homogénéisation. De par son homogénéité, ce mélange de charge donne une matière fluide et plus facile à mouler.

Lorsque l'on cherche à réaliser des produits sanitaires avec des teintes mouchetées ou granitées, les grains mouchetés sont rendus par les pigments qui peuvent avoir une couleur identique ou différente du fond. Ce sont les grains de carbonate de calcium qui produiront donc cet effet de coloration.

Dans le cas d'un produit coloré, on a également constaté que le marbre préconisé en tant que charge qui est le support du colorant procure une meilleure adhérence du pigment sur le substrat. En cas de revêtement pigmentaire, on obtient donc un meilleur résultat avec le marbre qu'avec la silice en ce qui concerne l'adhérence du pigment.

### EXEMPLE DE COMPOSITION MATIERE A MOULER SPECIALEMENT DESTINEE AUX PRODUITS SANITAIRES

- Résine polyester insaturée (type orthophtalique NPG) dissoute dans le styrène 10 à 20 %
- Polymère anti-retrait (type polyéthylène et/ou polyester sature) 4 à 7 %
- Sulfate de Zinc (pigment) 0 à 2 %
- Autre pigment 0 à 0,5 %
- Ethyl-2 perexanoate de butyle tertiaire 0,03 à 0,5 %
- Perbenzoate de butyle tertiaire 0,10 à 0,4 %
- Triméthyl-3,3,5 perhexanoate de butyle tertiaire 0 à 0,1 %
- Stéarate de Zinc 0,75 à 1,7 %
- Stéarate de Calcium 0 à 0,80 %
- Parabenzoquinone 0 à 0,05 %
- Fibres de verre 6 mm 5 à 10 %
- Trihydrate d'alumine 30 à 40 %
- Carbonate de Calcium 15 à 25 %
- Microbilles de verre 12 à 25 %

Le procédé mis en oeuvre est un procédé classique utilisant la compression à chaud avec des pressions de 50 à 180 bars, à des températures de 120 à 170°C.

On utilisera de préférence deux mélangeurs, un premier mélangeur sec avec l'ensemble des produits secs en partie haute et un deuxième mélangeur liquide avec l'ensemble des produits liquides en partie basse. L'utilisation des microbilles de verre permet d'obtenir un meilleur remplissage du moule et une meilleure compacité et homogénéité du mélange. Il y aura donc moins de rebuts créés par ces microbulles. L'empilage des billes et leur positionnement par rapport aux fibres suppriment quasiment l'effet de vague lors du poste retrait de la pièce pendant le refroidissement, ce qui est encore un avantage important au niveau des coûts de fabrication.

Les produits sanitaires obtenus ont de très bonnes qualités en ce qui concerne l'agression par l'eau. Ce résultat a été obtenu par un choix judicieux des charges et des résines. Le trihydrate d'alumine micronisé est utilisé dans sa formulation pour sa faible absorption d'eau ainsi que pour son rôle de pompier interne de la matière.

L'utilisation du carbonate de calcium sous forme cristalline de marbre avec enrobage pigmentaire permet de supprimer l'absorption d'eau du carbonate. Dans le cas d'un carbonate non enrobé, on peut utiliser un taux de résine plus élevé, vers les 20 %. Les grains de CaCO₃ pompent la résine qui devient hydrophobe. On enrobe les grains de CaCO₃ avec de la résine pour les protéger de l'action de l'eau.

On a ainsi pu réaliser des produits sanitaires ayant un aspect naturel avec une bonne résistance mécanique, phonique et thermique. Ces produits sanitaires auront également toutes les qualités esthétiques de coloration souhaitées.

On donnera ci-après des modes d'exécution d'une formule banc uni et d'une formule blanc moucheté.

### FORMULE BLANC UNI

- Résine polyester insaturée (orthophtalique) à 65 % dans le styrène 13,72 %
- Polymère anti-retrait (polyéthylène et polyester saturé) à 35 % dans le styrène 6,00 %
- Sulfate de Zinc 1,72 %
- Ethyl-2 perexanoate de butyle tertiaire 0,10 %
- Perbenzoate de butyle tertiaire 0,14 %
- Triméthyl-3,3,5 perhexanoate de butyle tertiaire 0,04 %
- Stéarate de Zinc 1,37 %
- Parabenzoquinone 0,01 %
- Fibres de verre 6 mm 8,23 %
- Trihydrate d'alumine 34,30 %
- Carbonate de Calcium 17,15 %
- Microbilles de verre 17,15 %

On verse dans un mélangeur à liquide la résine, le polymère, l'azurant, les peroxyde et la parabenzoquinone. Dès que le mélange est homogène, le contenu de ce mélangeur est déversé dans un malaxeur type bras en Z.

On ajoute ensuite le trihydrate d'alumine, le carbonate de calcium micronisé, les microbilles de verre, le sulfure de zinc ainsi que l'agent de démoulage. Le mélange s'effectue jusqu'à obtention d'une pâte homogène. Lorsque le mélange est homogène, on ajoute la fibre de verre. Le mélange s'effectue ensuite en un temps déterminé de façon à imprégner la fibre.

Le BMC est ensuite moulé dans un moule en acier de dureté appropriée, de préférence chromé, chauffé entre 140 et 150°C sous une pression de 100 bars. Le temps de réticulation du produit est compris entre 2 et 5 minutes pour une pièce d'une épaisseur de 5 millimètres.

On obtient ainsi des articles moulés dont la résistance à la rayure selon la norme NFT 51 113 est de 50 N, dont la résistance à l'absorption d'eau est de 0,16 % en poids selon la norme ISO 62.

### FORMULE BLANC MOUCHETE

- Résine polyester insaturée (orthophtalique) à 65 % dans le styrène 11,21 %
- Polymère anti-retrait (polyéthylène et polyester saturé) à 35 % dans le styrène 5,23 %
- Sulfate de Zinc (pigment) 1,12 %
- Azurant 0,01 %
- Ethyl-2 perexanoate de butyle tertiaire 0,16 %
- Perbenzoate de butyle tertiaire 0,37 %
- Stéarate de Zinc 1,49 %
- Parabenzoquinone 0,01 %
- Fibres de verre 6 mm 7,17 %
- Trihydrate d'alumine 32,88 %
- Carbonate de Calcium (agrégat coloré gris clair) 16,44 %
- Microbilles de verre 23,91 %

On verse dans un mélangeur à liquide la résine, le polymère, l'azurant, les peroxyde et la parabenzoquinone. Dès que le mélange est homogène, le contenu de ce mélangeur est déversé dans un malaxeur type bras en Z.

On ajoute ensuite le trihydrate d'alumine, les microbilles de verre, le sulfure de zinc ainsi que l'agent de démoulage. Le mélange s'effectue jusqu'à obtention d'une pâte homogène. On ajoute ensuite le carbonate de calcium coloré. Lorsque le mélange est homogène, on ajoute la fibre de verre. Le mélange s'effectue ensuite en un temps déterminé de façon à imprégner la fibre.

Le BMC est ensuite moulé dans un moule en acier de dureté appropriée, de préférence chromé, chauffé entre 140 et 150°C sous une pression de 100 bars. Le temps de réticulation du produit est compris entre 2 et 5 minutes pour une pièce d'une épaisseur de 5 millimètres.

On obtient ainsi des articles moulés dont la résistance à la rayure selon la norme NFT 51 113 est de 50 N, dont la résistance à l'absorption d'eau est de 0,16 % en poids selon la norme ISO 62.

## Revendications

1. Composition matière à mouler spécialement destinée aux produits sanitaires, tels que éviers, baignoires ou lavabos en matière plastique, susceptibles d'être moulés sous pression et à haute température, comprenant :
- une résine polyester réticulable dans un monomère liquide avec un groupe vinyle polymérisable,
- un polymère thermoplastique anti-retrait du type polyéthylène soluble dans le mélange de résine,
- un catalyseur peroxyde organique pour amorcer la réticulation de la résine par apport de radicaux libres lors de leur destruction à haute température,
- des fibres de renforcement telles que des fibres de verre pour assurer la rigidité du matériau réticulé,
- un agent de démoulage tel que stéarate de calcium ou de zinc,
caractérisée par le fait qu'elle contient les charges suivantes :
1°/ des microbilles de verre sodocalcique avec enrobage chimique,
2°/ du carbonate de calcium sous sa forme cristalline de marbre,
pour diminuer la dégradation des fibres de verre et obtenir un produit sanitaire résistant à l'abrasion, la chaleur et l'eau.

2. Composition matière à mouler spécialement destinée aux produits sanitaires, selon la revendication 1, caractérisée par le fait que le polymère thermoplastique anti-retrait est choisi parmi le polyester saturé, polyacétate de vinyle, EVA (copolymères d'éthylène et d'acétate de vinyle), ABS (copolymères d'acrylonitrile, de butadiène et de styrène), PMMA (le polyméthacrylate de méthyle).

3. Composition matière à mouler spécialement destinée aux produits sanitaires, selon la revendication 1, caractérisée par le fait que le mélange de charges comprend en outre le carbonate de calcium sous forme cristalline de marbre, des microbilles de verre, du trihydrate d'alumine micronisé.

4. Composition matière à mouler spécialement destinée aux produits sanitaires, selon la revendication 1, caractérisée par le fait que le carbonate de calcium avec enrobage pigmentaire est de type epoxy polyuréthanne polyester saturé pour assurer une meilleure adhérence de pigment sur les substrats.

5. Composition matière à mouler spécialement destinée aux produits sanitaires, selon la revendication 1, caractérisée par le fait qu'elle comprend les produits suivants :
- Résine polyester insaturée (type orthophtalique NPG) dissoute dans le styrène 10 à 20 %
- Polymère anti-retrait (type polyéthylène et/ou polyester sature) 4 à 7 %
- Sulfate de Zinc (pigment) 0 à 2 %
- Autre pigment 0 à 0,5 %
- Ethyl-2 perexanoate de butyle tertiaire 0,03 à 0,5 %
- Perbenzoate de butyle tertiaire 0,10 à 0,4 %
- Triméthyl-3,3,5 perhexanoate de butyle tertiaire 0 à 0,1 %
- Stéarate de Zinc 0,75 à 1,7 %
- Stéarate de Calcium 0 à 0,80 %
- Parabenzoquinone 0 à 0,05 %
- Fibres de verre 6 mm 5 à 10 %
- Trihydrate d'alumine 30 à 40 %
- Carbonate de Calcium 15 à 25 %
- Microbilles de verre 12 à 25 %

6. Composition matière à mouler spécialement destinée aux produits sanitaires, selon la revendication 1, caractérisée par le fait que le carbonate de calcium sous sa forme cristalline de marbre dispose d'un enrobage pigmentaire qui assure une meilleure adhérence sur les substrats.

## Patentansprüche

1. Zusammenstellung einer Formmasse, insbesondere für Sanitärprodukte, wie Spülbecken, Badewannen oder Waschbecken aus Kunststoff, die geeignet sind, unter Druck und bei hoher Temperatur geformt zu werden, umfassend:
- ein in einem flüssigen Monomer mit einer polymerisierbaren Vinylgruppe vernetzbares Polyestcrharz,
- ein in der Harzmischung lösbares, schrumpfungsverhütendes, thermoplastisches Polymer der Art Polyäthylen,
- einen organischen Peroxydkatalysator zum Einleiten der Vernetzung durch Einbringung von freien Radikalen während deren Zersetzung bei hoher Temperatur,
- Verstärkungsfasern, wie Glasfasern, um die Steifheit des vernetzten Materials zu sichern,
- einen Entformungsagent, wie Kalzium- oder Zinkstearat,
dadurch gekennzeichnet, daß sie die folgenden Füllstoffe enthält:
1°/ Kalknatronglas-Mikrokugeln mit chemischer Beschichtung,
2°/ Kalziumkarbonat in Marmorkristalform,
um den Zerfall der Glasfasern zu vermindern und ein abrasions-, wärme- und wasserbeständiges Sanitärprodukt zu erhalten.

2. Zusammenstellung einer Formmasse, insbesondere für Sanitärprodukte, nach Anspruch 1, dadurch gekennzeichnet, daß das schrumpfungsverhütende, thermoplastische Polymer aus gesättigtem Polyester, Vinylpolyazetat, EVA (Ethylen- und Vinylazetat-Mischpolymerisaten), ABS (Akrylnitril-, Butadien- und Styrol-Mischpolymerisaten), PMMA (Methylpolymethakrylat) gewählt wird.

3. Zusammenstellung einer Formmasse, insbesondere für Sanitärprodukte, nach Anspruch 1, dadurch gekennzeichnet, daß die Füllstoffmischung außerdem Kalziumkarbonat in Marmorkristalform, Glas-Mikrokugeln, mikronisiertes Tonerdetrihydrat enthält.

4. Zusammenstellung einer Formmasse, insbesondere für Sanitärprodukte, nach Anspruch 1, dadurch gekennzeichnet, daß das Kalziumkarbonat mit Pigmentbeschichtung der Art Epoxydharz-Polyurethan-gesättigter Polyester ist, um eine bessere Haftung des Pigmentes an den Substraten zu sichern.

5. Zusammenstellung einer Formmasse, insbesondere für Sanitärprodukte, nach Anspruch 1, dadurch gekennzeichnet, daß sie folgende Produkte enthält:
- im Styrol gelöstes, ungesättigtes
Polyesterharz (der Art NPG-Orthophtalat) 10 bis 20 %
- schrumpfungsverhütendes Polymer (der Art
Polyäthylen und/oder gesättigter Polyester) 4 bis 7 %
- Zinksulfat (Pigment) 0 bis 2 %
- sonstiges Pigment 0 bis 0,5 %
- Äthyl-2 tertiäres Butylperhexanoat 0,03 bis 0,5 %
- tertiäres Butylperbenzoate 0,10 bis 0,4 %
- Trimethyl-3,3,5 tertiäres Butylperhexanoat 0 bis 0,1 %
- Zinkstearat 0,75 bis 1,7 %
- Kalziumstearat 0 bis 0,80 %
- Parabenzochinon 0 bis 0,05 %
- Glasfasern 6 mm 5 bis 10 %
- Tonerdetrihydrat 30 bis 40 %
- Kalziumkarbonat 15 bis 25 %
- Glas-Mikrokugeln 12 bis 25 %

6. Zusammenstellung einer Formmasse, insbesondere für Sanitärprodukte, nach Anspruch 1, dadurch gekennzeichnet, daß das Kalziumkarbonat in seiner Marmorkristalform eine Pigmentbeschichtung hat, die eine bessere Haftung an den Substraten sichert.

## Claims

1. Composition of moulding material, especially for sanitary products, such as sinks, bath-tubs or lavatory basins made of plastic material, capable of being moulded under pressure and at high temperature, comprising:
- a polyester resin cross-linkable in a liquid monomere with a polymerisable vinyl group,
- a polyethylene-type anti-shrinkage thermoplastic polymere soluble in the resin mixture,
- an organic peroxide catalyst for initiating the cross-linking of the resin through the supply of free radicals during its destruction at high temperature,
- reinforcing fibres, such as fiberglass, in order to ensure the rigidity of the cross-linked material,
- a release agent, such as calcium or zinc stearate,
characterised in that it contains the following fillers:
1°/ soda lime glass microballs with chemical coating,
2°/ calcium carbonate in its crystalline marble form,
in order to reduce the degradation of the fiberglass and to obtain an abrasion-, heat- and water-resistant sanitary product.

2. Composition of moulding material, especially for sanitary products, according to claim 1, characterised in that the anti-shrinkage thermoplastic polymere is selected among saturated polyester, vinyl polyacetate, EVA (ethylene and vinyl acetate copolymeres), ABS (acrylonitrile, butadiene and styrene copolymeres), PMMA (methyl polymethacrylate).

3. Composition of moulding material, especially for sanitary products, according to claim 1, characterised in that the filler mixture in addition includes calcium carbonate in crystalline marble form, glass microballs, micronised alumina trihydrate.

4. Composition of moulding material, especially for sanitary products, according to claim 1, characterised in that the calcium carbonate with pigmentary coating is of the epoxy resin polyurethane saturated polyester type, in order to ensure a better adhesion to pigments on the substrates.

5. Composition of moulding material, especially for sanitary products, according to claim 1, characterised in that it includes the following products:
- unsaturated polyester resin (NPG orthophthalic type)
disolved in the styrene 10 to 20 %
- anti-shrinkage polymere (polyethylene and/or
saturated polyester type) 4 to 7 %
- zinc sulfate (pigment) 0 to 2 %
- other pigment 0 to 0,5 %
- ethyl-2 tertiary butyl perhexanoate 0,03 to 0,5 %
- tertiary butyl perbenzoate 0,10 to 0,4 %
- trimethyl-3,3,5 tertiary butyl perhexanoate 0 to 0,1 %
- zinc stearate 0,75 to 1,7 %
- calcium stearate 0 to 0,80 %
- parabenzoquinone 0 to 0,05 %
- fiberglass 6 mm 5 to 10 %
- alumina trihydrate 30 to 40 %
- calcium carbonate 15 to 25 %
- glass microballs 12 to 25 %

6. Composition of moulding material, especially for sanitary products, according to claim 1, characterised in that the calcium carbonate in its crystalline marble form has a pigmentary coating which ensures a better adhesion on the substrates.
